# EUROPEAN PATENT APPLICATION

(11) **EP 1 729 047 A1**
(43) Date of publication of application: **06.12.2006**
(21) Application number: 04807536.0
(22) Date of filing: 22.12.2004
(51) Int. Cl.: F16K 31/60

(54) **TORQUE-LIMITER-EQUIPPED HANDLE AND FLUID CONTROLLER HAVING THE HANDLE**

(30) Priority: 26.03.2004 JP 2004093499
(71) Applicant: Kabushiki Kaisha Fujikin, Nishi-ku Osaka-shi, Osaka 550-0012 (JP)
(72) Inventor: DAIDO, Kunihiko, c/o Kabushiki Kaisha Fujikin, Osaka-shi,Osaka 5500012 (JP); MIYAGAWA, Hideyuki, c/o Kabushiki Kaisha Fujikin, Osaka-shi,Osaka 5500012 (JP)
(74) Representative: Müller, Gottfried
(86) International application number: PCT/JP2004/019179
(87) International publication number: WO 2005/093306

(57) **Abstract**

[PROBLEMS]

To provide a handle equipped with a torque limiter capable of preventing application of excessive torque, and a fluid controller provided with the same.

[MEANS FOR SOLVING PROBLEMS]

An elastic body (7) has a minimum urging force capable of developing a function desired when the handle is lowered to the lowest position. Disposed in the handle are a transmitting member (8) urged by the elastic body and a transmitted material (10) against which the lower surface of the transmitting material is pressed. The surface of the transmitted material opposed to the transmitting material or the surface of the transmitting material opposed to the transmitted material is formed with serrations along the periphery having inclined surfaces (81, 101) and vertical surfaces (82, 102) which alternately appear. The inclined surfaces of the serrations are upwardly tapered along the direction of rotation in which the cover body descends.

## Description

### BACKGROUND OF THE INVENTION

### Technical Field

The present invention relates to a handle with a torque-limiter and a fluid controller with the handle. Particularly the present invention relates to a handle characterized in a torque-limiting function that is capable of preventing excessive torque from being applied to a diaphragm. The present invention also relates to a fluid controller with the handle to be opened and to be closed with a constant tightening force. Therefore the fluid controller will not deform valve membranes due to excessive tightening in closing operation. This results in less damage or less wearing on the valve membranes, and so the fluid controller will provide stable control on flow rate for a long period.

### Description of the Related Art

Diaphragm valves are generally used to control fluid flow in a chemical industry plant for handling corrosive fluid or high purity fluid.

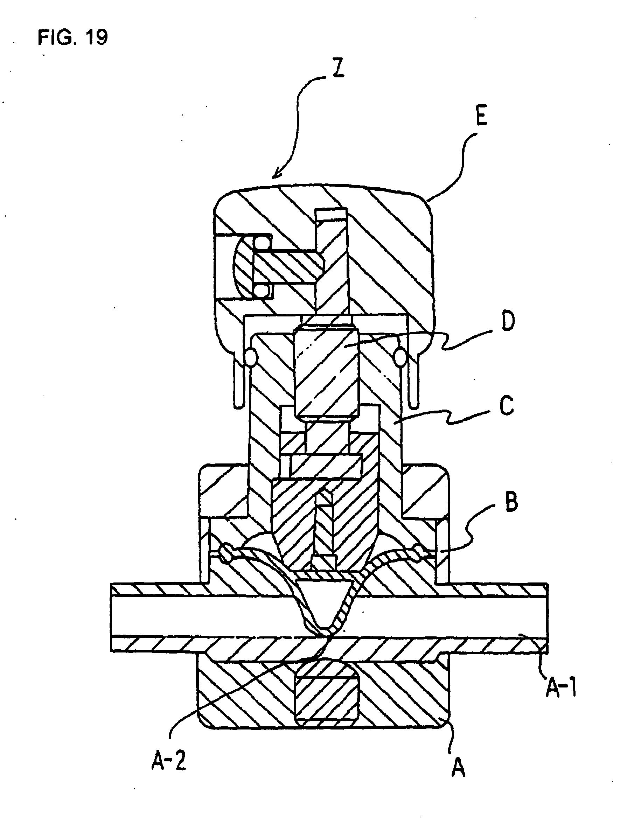

As an example, Fig. 19 shows a diaphragm valve comprising a valve casing (A) having a fluid channel (A-1), a diaphragm (B) making contact with and being apart from the fluid channel (A-1), a pinching element (C) for fixating the periphery of the diaphragm (B), an operating mechanism (D) for controlling the diaphragm (B) while it is making contact and being apart, and a handle (E) connected to the operating mechanism (D).

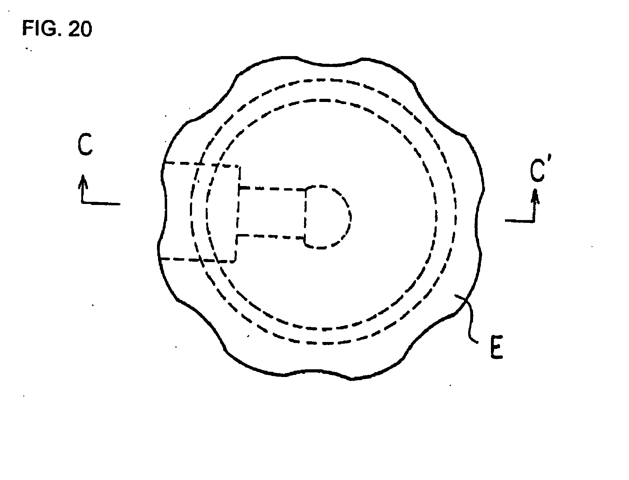

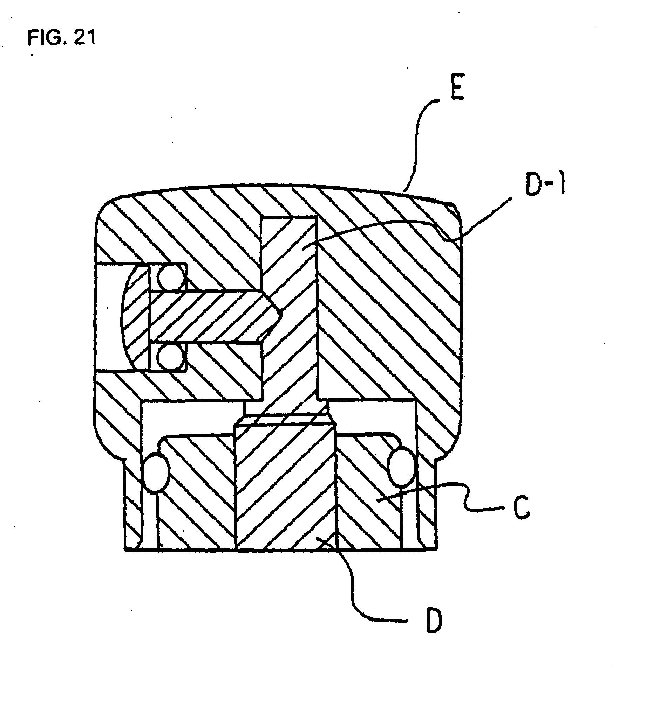

In this diaphragm valve, as shown in Fig. 20 and 21, an operating bar (D-1) that forms a part of the operating mechanism is engagedly fixed to the inside of the handle (E). This operating bar (D-1) moves upwardly and downwardly, as the handle (E) is rotated.

When the handle (E) is rotated, the operating mechanism (D) connected to the handle (E) moves upwardly and downwardly. This causes the diaphragm (B) to make contact with and be away from the meeting portion (A-2) of the valve casing (A) and accordingly the fluid channel (A-1) is opened or closed.

Since the diaphragm (B) of the diaphragm valve (Z) described above is always in contact with fluid, diaphragm (B) is generally made of soft rubber material having an excellent corrosion resistance and flexibility. The fluid channel (A-1) is opened and closed with the soft rubber material. Thus, this fluid controller does not significantly interrupt the fluid flow. Also, soft-rubber-made diaphragm (B) provides high sealing performance to prevent the leakage of the fluid. Moreover the fluid controller with soft-rubber-made diaphragm (B) is free from corrosion. Thus, this fluid controller has been advantageously used for blocking chemical agents including acid.

In the conventional diaphragm valve (Z) of the configuration described above, however, diaphragm (B) tends to be damaged while it is closing the fluid channel (A-1). This means that as the diaphragm valve (Z) is used repeatedly for a long time, the diaphragm (B) is seriously damaged. Therefore there is a problem that such a conventional diaphragm valve (Z) cannot stably control fluid flow over a long period.

Specifically, in the diaphragm valve (Z) described above, the fluid channel (A-1) is closed by rotating the handle (E) to move down the operating mechanism (D) and then to press the diaphragm (B) to the predetermined meeting area (A-2). When the fluid channel (A-1) is closed in this way, the handle (E) often compresses the diaphragm too much and imposes excessive load on the diaphragm. Accordingly, during repeated use for many years, the diaphragm (B) tends to damage and abrade. Therefore, this valve (Z) cannot stably control fluid flow over a long period.

Considering these problems, the applicant of this application has created the technique disclosed in Japan Patent No. 3,358,147.

The technique disclosed in Japan Patent No. 3,358,147 enables a diaphragm to open and close a fluid channel with a constant compressing force. The technique disclosed therein is excellent in that the valve hardly damages or abrades during repeated use and serves for stable flow control over a long period.

The valve disclosed therein, however, sometimes has a difficulty in opening the fluid channel since, in this valve, the lower end of a spherical transmitting member is engaged into a concave portion having spherical shape using pushing force of an elastic element.

Specifically, in the configuration of the valve disclosed therein, resisting force acting on the handle when the handle is turned clockwise is equivalent to that when the handle is turned anticlockwise. This leads to a problem that it is sometimes difficult or impossible to rotate the handle in the direction of opening the fluid channel. Ideally, the rotation of the handle only in the direction of closing the fluid channel (tightening direction) should be limited so that the diaphragm cannot be compressed too much (i.e. allowing the handle to rotate idly without affecting the operating mechanism).

Also, this valve has another problem that it is difficult to slightly adjust or change the limit torque because the spring constant of the elastic element has to be modified to adjust the limit torque.

Furthermore the valve comprises a lot of parts. Therefore it is difficult to mass-produce this valve, and also this valve becomes very expensive.

The present invention is made to solve the above-described problems of the prior part and to provide a fluid controller that enables to open and close a fluid channel using a valve membrane (e.g. diaphragm), with a constant tightening force, that gives little abrasion and damage to the valve membrane (e.g. diaphragm), that can stably control fluid flow over a long period, that can securely open the fluid channel, and that makes it easy to set torque limit. The present invention also provides a handle having a torque limiter that can be applied to a fluid controller or the like and that can prevent excessive torque to be transmitted to the fluid controller or the like.

### SLTMMARY OF THE INVENTION

The present invention according to claim 1 provides A handle having a torque limiter usable in a device having an operating mechanism moving vertically according to the rotation of a handle element, the handle element comprising: a cover portion configured to move down by being rotated and stop at the predetermined lowest position; a handle body disposed inside said cover portion and having a lower portion that is connected to said operating mechanism; said cover portion comprising: receiving holes disposed therein; elastic bodies inserted in said receiving holes for pushing down said operating mechanism; a transmitting member disposed at one end of said elastic bodies for transmitting the pushing force of said elastic bodies to said handle body; wherein said elastic bodies push down said operating mechanism with a minimum pushing force to obtain desired effect when said cover portion reaches said predetermined lowest position; the upper portion of said handle body having therein a transmitted member to which the bottom surface of said transmitting member is pressed, wherein said transmitted member has a serration on its surface facing said transmitting member or said transmitting member has a serration on its surface facing said transmitted member; said serration comprises inclined surfaces and vertical surfaces that are alternately arranged in a circumferential direction; and said inclined surfaces are tilted upwardly along the direction in which said cover portion is rotated to move down.

The present invention according to claim 2 provides a handle having a torque limiter usable in a device having an operating mechanism moving vertically according to the rotation of a handle element, the handle element comprising: a cover portion having a lower portion that is connected to said operating mechanism and configured to move down by being rotated and stop at the predetermined lowest position; a handle body disposed inside said cover portion; said handle body comprising: receiving holes disposed therein; elastic bodies inserted in said receiving holes for pushing down said operating mechanism; a transmitting member disposed at one end of each of said elastic bodies for transmitting the pushing force of said elastic bodies to said handle body; wherein said elastic bodies push down said operating mechanism with a minimum pushing force to obtain desired effect when said cover portion reaches said predetermined lowest position; the lower portion of said cover portion having therein a transmitted member to which the upper surface of said transmitting member is pressed, wherein said transmitted member has a serration on its surface facing said transmitting member or said transmitting member has a serration on its surface facing said transmitted member; said serration comprises inclined surfaces and vertical surfaces that are alternately arranged in a circumferential direction; and said inclined surfaces are tilted upwardly along the direction in which said cover portion is rotated to move down.

Present invention according to claim 3 provides a fluid controller comprising: valve casing having fluid channel therein; valve membrane for opening and closing said fluid channel; an operating mechanism having a lower end that is connected to the upper side of said valve membrane; a handle element for vertically moving said operating mechanism; said handle element comprising: a cover portion configured to move down by being rotated and stop at the predetermined lowest position; a handle body disposed inside said cover portion and having a lower portion that is connected to said operating mechanism; said cover portion comprising: receiving holes disposed therein; elastic bodies inserted in said receiving holes for pushing said operating mechanism downwardly; a transmitting member disposed at one end of said elastic bodies for transmitting the pushing force of said elastic bodies to said handle body; wherein said elastic bodies push down said operating mechanism with a minimum pushing force to obtain desired effect when said cover portion reaches said predetermined lowest position; the upper portion of said handle body having therein a transmitted member to which the bottom surface of said transmitting member is pressed, wherein said transmitted member has a serration on its surface facing said transmitting member or said transmitting member has a serration on its surface facing said transmitted member; said serration has inclined surfaces and vertical surfaces that are alternately arranged in a circumferential direction; and said inclined surfaces are tilted upwardly along a direction in which said cover portion is rotated to move down.

The present invention according to claim 4 provides a fluid controller comprising: valve casing having fluid channel therein; valve membrane for opening and closing said fluid channel; an operating mechanism having a lower end that is connected to the upper side of said valve membrane; a handle element for vertically moving said operating mechanism; said handle element comprising: a cover portion configured to move down by being rotated and stop at the predetermined lowest position; a handle body disposed inside said cover portion and having a lower portion that is connected to said operating mechanism; said handle body comprising: receiving holes disposed therein; elastic bodies inserted in said receiving holes for pushing said operating mechanism downwardly; a transmitting member disposed at one end of each of said elastic bodies for transmitting the pushing force of said elastic bodies to said handle body; wherein said elastic bodies push down said operating mechanism with a minimum pushing force to obtain desired effect when said cover portion reaches said predetermined lowest position; the lower portion of said cover portion having therein a transmitted member to which the upper surface of said transmitting member is pressed, wherein said transmitted member has a serration on its surface facing said transmitting member or said transmitting member has a serration on its surface facing said transmitted member; said serration has inclined surfaces and vertical surfaces that are alternately arranged in a circumferential direction; and said inclined surfaces are tilted upwardly along a direction in which said cover portion is rotated to move down.

According to another embodiment of the present invention, there is provided a fluid controller, wherein said transmitting member having on its surface facing said transmitted member a serration in which inclined surfaces and vertical surfaces are alternately arranged in a circumferential direction; wherein said transmitted member having on its surface facing said transmitting member a serration in which inclined surfaces and vertical surfaces are alternately arranged in a circumferential direction; and each of said inclined surfaces of said transmitted member is arranged to be pressed to one of said inclined surfaces of said transmitting member.

According to another embodiment of the present invention, there is provided a fluid controller, wherein said transmitting member comprises a plurality of transmitting pieces having a circular surface facing said transmitted member; said transmitting pieces are arranged along the circumferential direction of said transmitted member; and each of said circular surface is configured to be pressed to one of said inclined surfaces of said transmitted member.

According to another embodiment of the present invention, there is provided a fluid controller, wherein said transmitted member comprises a plurality of transmitted pieces having a circular surface facing said transmitting member; said transmitted pieces are arranged along the circumferential direction of said transmitting member; and each of said circular surface are arranged to be pressed to one of said inclined surfaces of said transmitting member.

According to another embodiment of the present invention, there is provided a fluid controller, wherein either said plurality of transmitting pieces or said plurality of transmitted pieces has a spherical shape.

According to another embodiment of the present invention, there is provided a fluid controller, wherein said receiving holes are configured as a ring-shaped groove; and said elastic bodies comprise springs having the same diameter as said ring-shaped groove.

### EFFECT OF THE INVENTION

According to the invention described in claim 1 and 2, the cover portion is configured to move down and stop at the predetermined lowest position. Also, the elastic bodies are configured to push down the operating mechanism with a minimum pushing force to obtain desired effect when said cover portion reaches the predetermined lowest position. Accordingly, it is possible to provide a diaphragm with appropriate and constant compression force for obtaining the desired effect. Further, in this embodiment, the transmitted member is configured to have a serration on its surface facing the transmitting member. The serration consists of inclined surfaces and vertical surfaces that are alternately arranged along the circumferential direction. Each inclined surface of the serration is tilted upwardly along the direction in which the cover portion is rotated to move down. Therefore, when rotated in one direction, the cover portion rotates idly upon being applied excessive load. On the other hand, when rotated in the other direction, the cover portion transmits sufficient force to the handle body. Still further, it is possible to adjust the limit torque by simply modifying the angle of the inclined surfaces.

According to the invention described in claim 3 and 4, the cover portion is configured to move down and stop at the predetermined lowest position. Also, the elastic bodies are configured to provide the valve membrane with the minimum compression force to open and close the fluid channel. Accordingly, the valve membrane can open and close the fluid channel with appropriate and constant compression force so that it hardly abrades or damages during repeated use. This enables the fluid controller to stably control the flow rate over a long period. Further, in this embodiment, the transmitted member is configured to have a serration on its surface facing the transmitting member. The serration consists of inclined surfaces and vertical surfaces that are alternately arranged along the circumferential direction. Each inclined surface of the serration is tilted upwardly along the direction in which the cover portion is rotated to move down. Therefore, when rotated in the direction of closing the fluid channel, the cover portion idly rotates upon being applied excessive load. On the other hand, when rotated in the direction of opening the fluid channel, the cover portion securely transmits its force to the handle body so as to open the fluid channel. Still further, it is possible to adjust the limit torque by simply modifying the angle of the inclined surfaces.

According to the invention described in claim 5, when the cover portion is rotated in the direction of closing the fluid channel with excessive force, the inclined surfaces of the transmitting member and the inclined surfaces of the transmitted member slide along each other so that the cover portion rotates idly. This configuration allows for reducing the number of components included in the fluid controller and thereby for reducing the manufacturing cost.

According to the invention descried in claim 6 and 7, when the cover portion is rotated in the direction of closing the fluid channel with excessive force, the circular surfaces slide along the inclined surfaces so that the cover portion rotates idly. On the other hand, when the cover portion is rotated in the direction of opening the fluid channel, the spherical surfaces contacts the vertical surfaces. This enables the cover portion to transmit sufficient force to the handle body so that the fluid channel is opened

According to the invention described in claim 8, either the transmitting pieces or the transmitted member has a spherical shape. Accordingly, when excessive force is applied to the transmitting pieces and the transmitted member, the spherical surface of either the transmitting pieces or the transmitted member idly rotates along the inclined surface of the transmitting pieces or the transmitted member. On the other hand, when the cover portion is rotated in the direction of opening the fluid channel, the spherical surfaces contacts the vertical surfaces of either the transmitting pieces or the transmitted member. This enables the cover portion to transmit sufficient force to the handle body so that the fluid channel is opened.

According to the invention described in claim 9, the fluid controller includes a reduced number of elastic bodies. Such fluid controller with reduced number of components is easy to be assembled with less manufacturing cost.

### BRIEF DESCRIPTION OF THE DRAWINGS

Hereinafter, preferred embodiments of the handle with a torque limiter and the fluid controller with the handle according to the present invention will be described with reference to the accompanying drawings.
FIG. 1 is a longitudinal sectional view showing the first embodiment of the fluid controller having a handle with a torque limiter according to the present invention.
FIG. 2 is a top view showing the structure of the cover portion.
FIG. 3 shows the structure of the transmitting member: Fig. 3(a) is a back view; Fig. 3(b) is a cross sectional view along the dashed and dotted line in Fig. 3 (a); Fig. 3(c) is another cross sectional view along the dashed and dotted line in Fig. 3(a); Fig. 3 (d) is a perspective view in which a part of the serration is omitted.
FIG. 4 is a longitudinal sectional view of the handle body.
FIG. 5 is a top view of the locking piece.
FIG. 6 shows the structure of the transmitted member: Fig. 6(a) is a top view; Fig. 6(b) is a cross sectional view along the dashed and dotted line in Fig. 6 (a); Fig. 6(c) is another cross sectional view along the dashed and dotted line in Fig. 6(a); Fig. 6(d) is a perspective view in which a part of the serration is omitted.
FIG. 7 is a perspective view showing the relative position of the transmitting member and the transmitted member according to the first embodiment.
FIG. 8 is a schematic diagram showing the operation of the transmitting member and the transmitted member according to the first embodiment.
FIG. 9 is a longitudinal sectional view showing the fluid controller according to the second embodiment of the present invention.
FIG. 10 is a perspective view showing the relative position of the transmitting member and the transmitted member according to the second embodiment.
FIG. 11 is a schematic diagram showing the operation of the transmitting member and the transmitted member according to the second embodiment.
FIG. 12 is a longitudinal sectional view showing the fluid controller according to the third embodiment of the present invention.
FIG. 13 is a perspective view showing the relative position of the transmitting member and the transmitted member according to the third embodiment.
FIG. 14 is a schematic diagram showing the operation of the transmitting member and the transmitted member according to the third embodiment.
FIG. 15 is a longitudinal sectional view showing the fluid controller according to the fourth embodiment of the present invention.
FIG. 16 is a perspective view showing the relative position of the transmitting member and the transmitted member according to the fourth embodiment.
FIG. 17 is a schematic diagram showing the operation of the transmitting member and the transmitted member according to the fourth embodiment.
FIG. 18 is a view showing another example of the transmitting member.
FIG. 19 is a cross sectional view showing an example of the conventional diaphragm valves.
FIG. 20 is a top view of the handle element included in the diaphragm valve shown in Fig. 19.
FIG. 21 is a cross sectional view along line C-C' in Fig. 20.

### DESCRIPTION OF THE PREFERRED EMBODIMENTS

The description herein will be made with respect to a fluid controller with the torque limiter as a typical example. It should be considered, however, the handle with a torque limiter of the present invention may be applied to a given device in which torque control is required to prevent excessive torque.

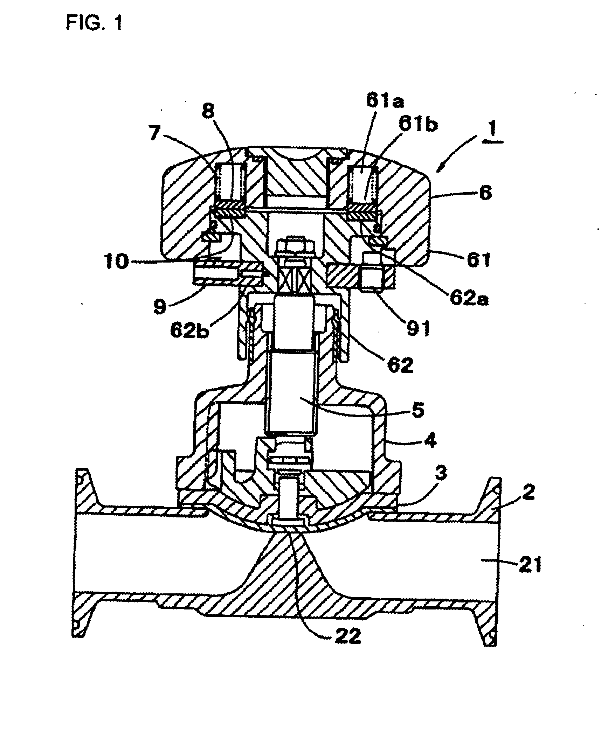

Fig. 1 is a longitudinal section that shows the first embodiment of the fluid controller configured with a handle with a torque limiter according to the present invention.

As shown, the fluid controller (1) of the present invention comprises a valve casing (2) having a fluid channel therein, a valve membrane (3) for opening or closing the fluid channel (21), a pinching element for fixing the periphery of the valve membrane (3) between the valve casing (2) and the pinching element (4), an operating mechanism (5) having a bottom end that is connected with an upper surface of the valve membrane (3), and a handle element (6) for moving vertically the operating mechanism (5).

In the examples shown, the fluid controller of the present invention is shown as a diaphragm valve of which valve membrane (3) comprises of a diaphragm. Hence, in the description below, the valve membrane (3) is explained as a diaphragm (3).

The present invention can be applied, however, not only to a diaphragm valve but also to any fluid controllers that might be deformed/damaged because of excessive tightening. Such fluid controllers can be a disc valve, a needle valve, a plug valve, a bellows valve, and the like.

Therefore, the valve membrane (3) of the present invention can be not only a diaphragm but also a valve membrane usable in the above fluid controllers for opening and closing a fluid channel.

The handle element (6) comprises a cover portion (61) and a handle body (62) that is disposed inside the cover portion (61).

The cover portion (61) moves vertically according to the rotation of the handle element (6). The distance in which the cover portion (61) can move downwardly is configured to be constant. The cover portion is configured to move down and stop at the predetermined lowest position.

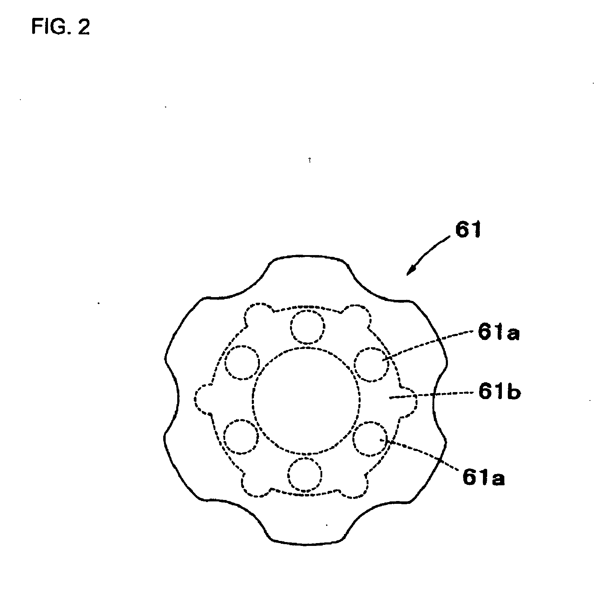

Fig. 2 is a plane view that shows the structure of the cover portion (61).

Inside the cover portion (61), a plurality of receiving holes (61a) that open downwardly is disposed. Each receiving hole (61a) receives an elastic body (7) comprising a coil spring and the like.

The elastic bodies (7) are configured to push the operating mechanism (5) downwardly. Also, the elastic bodies (7) are configured so that they provide the diaphragm with the minimum compression force to close the channel when the cover portion (61) reaches the predetermined lowest position.

The number and the shape of the elastic bodies (7) as well as those of the receiving holes (61a) for receiving the elastic bodies (7) are not limited to the example shown in the drawings. The elastic bodies (7) can be of any shape and number as long as a transmitting member can push a transmitted member with appropriate elastic force.

Although, in the example shown in the drawings, a plurality of receiving holes (61a) is arranged circularly and each receiving hole (61a) receives an elastic body (7), it is also possible to form one annular groove of a long diameter instead of the receiving holes (61a). The center of the annular groove corresponds to the axis of the handle. This annular groove receives an annular elastic body (spring) (7) having a diameter that is identical to the annular groove. Also, this alternative configuration may be applied to other embodiments described below instead of elastic bodies (7) and receiving holes (61a, 61c).

At one end (the bottom end) of each elastic body (7), a transmitting member (8) is disposed for transmitting the pushing force of the elastic bodies (7) to the handle body (62). This transmitting member (8) is engaged in a circular concave portion (61b) disposed in the bottom surface of the cover portion (61). The circular concave portion (61b) is configured to connect the plurality of the receiving holes (61a).

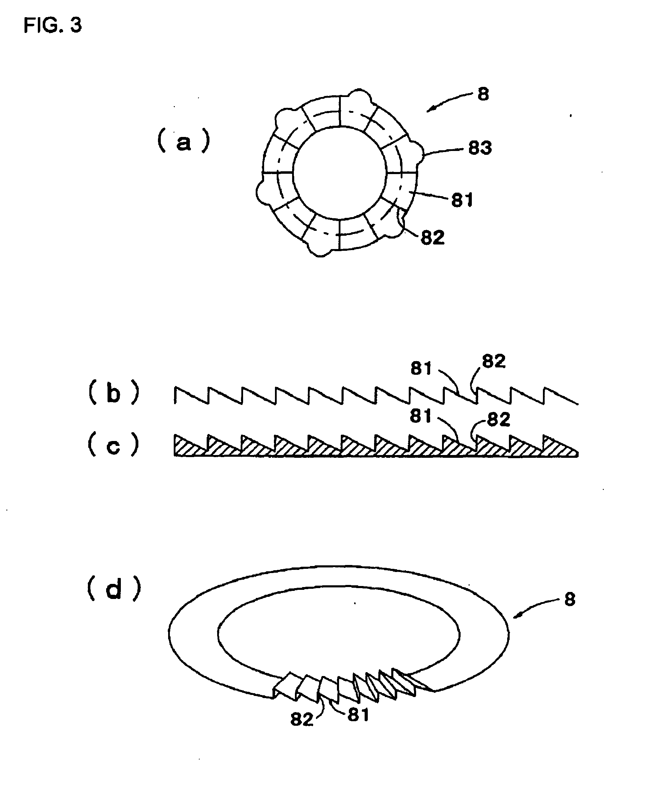

Fig. 3 shows the structure of the transmitting member (8). Fig. 3(a) is a view showing the rear surface (bottom surface) of the transmitting member (8); Fig. 3(b) is a cross sectional view along the dashed and dotted line in Fig. 3(a); Fig. 3(c) is another cross sectional view along the dashed and dotted line in Fig. 3(a); and Fig. 3(d) is a partially abbreviated perspective view of the transmitting member (8).

The transmitting member (8) is a circular member having a serration along its circumferential direction. The serration consists of inclined surfaces (81) and vertical surfaces (82) that are alternately arranged. Each inclined surface (81) is tilted upward in a rotational direction (clockwise direction). Protruding portions (83) for preventing rotation may be formed in several peripheral positions of the transmitting member (8).

In a case the serration described above is formed in the bottom surface of the transmitting member (8), the serration may be formed in both top and bottom surface by folding a plate as shown in Fig. 3(b) and (d). Alternatively, the transmitting member can be configured to have a flat top surface and a serrated bottom surface. In Fig. 3(d), the serration appears in a part of the transmitting member (8), but it should be considered that the serration is formed on the whole surface of the transmitting member (8).

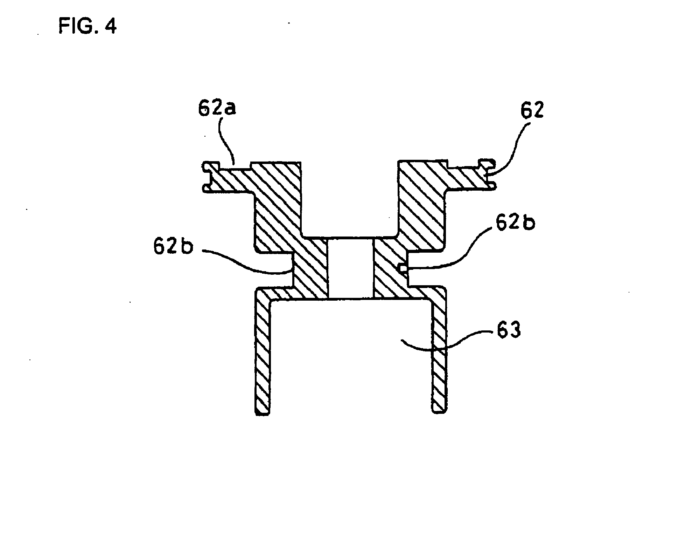

Fig. 4 is a longitudinal sectional view of the handle body (62).

The upper surface of the handle body (62) has a circular concave portion (62a).

The lower part of the handle body (62) has an engaging portion (63) that is connected with the operating mechanism (5). Via the engaging portion (63), the handle body (62) and the operating mechanism (5) are connected. Further, the middle part of the handle body (62), more specifically the part facing the lower part of the cover portion (61), has an engaging portion (62b) for engaging a locking piece (9) described below.

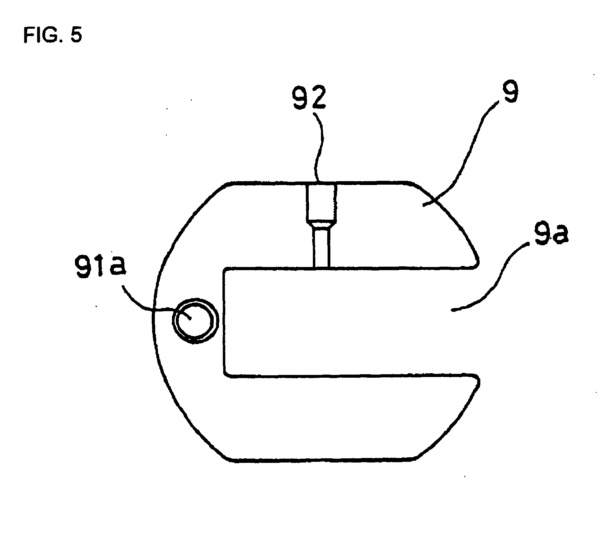

The locking piece (9) consists of a ring-shaped thin plate having in its center an opening (9a) for engaging the engaging portion (62b) of the handle body (62) as shown in Fig. 5. The locking piece (9) further has receiving holes (92) for removably receiving locking pins (not shown). One end of the locking piece (9) has a hole (91a) for receiving a screw (91) which extends upwardly from the hole (91a).

The transmitted member (10) is placed in the concave portion (62a) of the handle body (62). The transmitted member (10) is pushed by the bottom surface of the transmitting material (8).

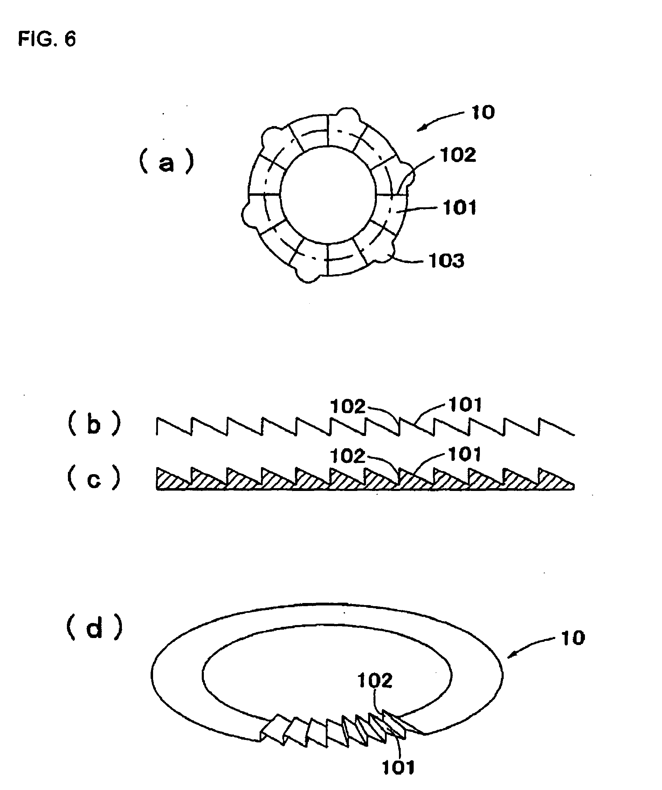

Fig. 6 is a view showing the features of the transmitted member (10). Fig. 6(a) is a plane view (top view); Fig. 6(b) is a cross sectional view along the dashed and dotted line in Fig. 6(a); Fig. 6(c) is another cross sectional view along the dashed and dotted line in Fig. 6(a); and Fig 6 (d) is a perspective view showing only a part of the serration.

The transmitted member (10) is a circular member having a diameter which is identical to that of the transmitting member (8). The transmitted member (10) has a serration. The serration consists of inclined surfaces (101) and vertical surfaces (102) that are alternately arranged. Each inclined surface (101) is tilted upwardly along a rotational direction (clockwise direction). Protruding portions (103) for preventing rotation may be formed in several peripheral positions of the transmitted member (10).

In a case the serration described above is formed in the transmitted member (10), the serration may be configured in both top and bottom surface by folding a plate as shown in Fig. 6(b) and (d). Alternatively, the transmitted member (10) may be configured to have a flat top surface and a serrated bottom surface. In Fig. 6(d), the serration appears in a part of the transmitted member (10), but it should be considered that the serration appears on the whole surface of the transmitted member (10)

The transmitted member (10) preferably has identical shape to the transmitting member (8) as described above, but other features (e.g. thickness) of each member, however, may be different from each other, as long as the serrations of the transmitting member (8) and the transmitted member (10) have an identical shape.

The number and the shape of the concavity and the convexity in the transmitting member (8) and in the transmitted member (10) are not limited to the example shown. The number of the concavity and the convexity may be increased and the tilting angle of the inclined surfaces may be modified.

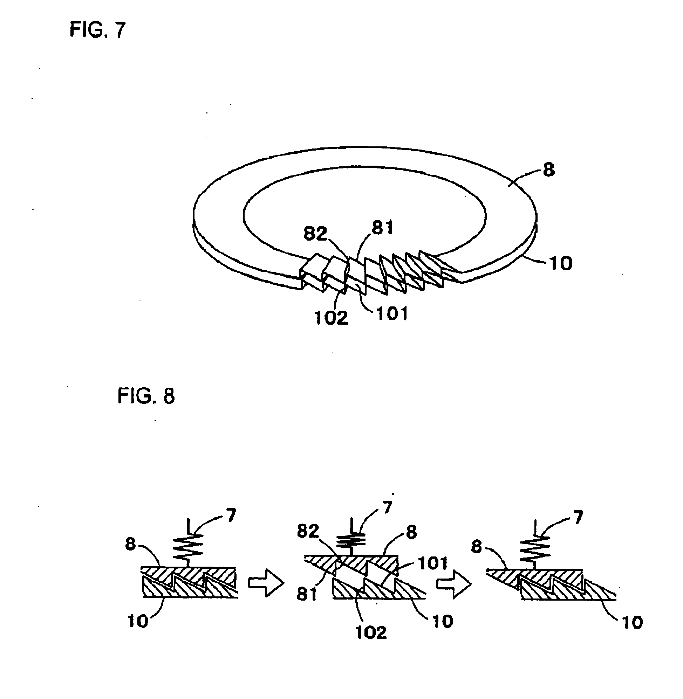

Fig. 7 is a perspective view showing the relative position between the transmitting member (8) and the transmitted member (10). In Fig. 7, the serration appears in a part of the transmitting member (8) and the transmitted member (10) like Fig. 3(d) and Fig. 6(d).

As shown in Fig. 7, the inclined surfaces of the transmitting member (8) and the transmitted member (10) are faced to each other so that the concavity and the convexity of both members engage with each other.

The transmitting member (8) is pressed downwardly to the transmitted member (10) by the elastic bodies (7) attached to the upper side of the transmitting member (8).

Next, the operation of the fluid controller according to the above-described first embodiment will be explained.

To close the fluid channel (21), the cover portion (61) of the handle element (6) is rotated in the direction of tightening (clockwise direction). While being rotated, the cover portion (61) descends to move the handle body (62) and the operating mechanism (5) downwardly. The cover portion (61) descends only in a predetermined distance and does not descend further. The cover portion is configured to move down and stop at the predetermined lowest position.

If the cover portion (61) is rotated to the tightening direction after the cover portion (61) has descended by the maximum distance (the cover portion (61) reached the predetermined lowest position), the inclined surfaces (81) of the transmitting member (8) slide along the inclined surfaces (101) of the transmitted member (10) as shown in Fig. 8. In other words, the transmitting member (8) idly rotates on the transmitted member (10). This results in idle rotation of the cover portion (61). When the cover portion (61) in this state is further rotated, the handle body (62) is not further moved downwardly.

On the other hand, if the cover portion (61) is rotated to the opposite direction (loosening direction), the vertical surfaces (82) of the transmitting member (8) meet the vertical surfaces (102) of the transmitted member (10). When the transmitting member (8) in this state is rotated, the transmitted member (10) is rotated accordingly. Thus, by rotating the cover portion (61), the handle body (62) is moved upwardly and the fluid channel (21) is opened.

While the cover portion (61) stays at the lowest position, the pushing force of the elastic bodies (7) downwardly acting to the receiving hole (61a) is transmitted from transmitting member (8) via the transmitted member (10) to the handle body (62) and the operating mechanism (5). Then the diaphragm (3) contacts the sealing seat (22) to close the fluid channel (21).

The elastic bodies (7) are configured so that they provide the diaphragm (3) with the minimum compressing force required to close the fluid channel (21) without any excessive force acting on the diaphragm (3).

As described above, the cover portion (61) is configured to descend in a predetermined distance (and to stop at the predetermined lowest position) and the elastic body is configured to have the minimum deformation ability that is necessary to allow the diaphragm (3) to close the fluid channel (21), so that the diaphragm can close the fluid channel with an appropriate and constant compressing force. Therefore, the diaphragm hardly abrades or damages during repeated use. This enables stable flow control over a long period.

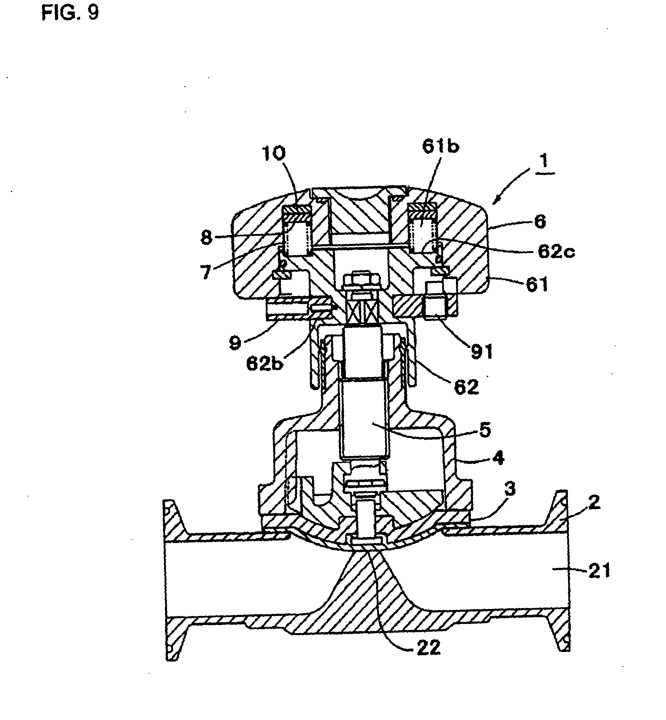

Fig. 9 is a longitudinal sectional view showing the second embodiment of the fluid controller according to the present invention.

Since the basic configuration of the second embodiment of the fluid controller is similar to those of the first embodiment, only the difference between these embodiments will be described below. Equivalent numerals are assigned to the similar configurations and the description of these configurations will be omitted.

The difference between the fluid controllers of the first and the second embodiments is that the transmitting member (8) and the transmitted member (10) in the second embodiment are reversely positioned with respect to each other, compared to the first embodiment. In the first embodiment, the transmitting member (8) is places on the transmitted member (10), while in the second embodiment the transmitted member (10) is placed on the second embodiment. The description below will be made mainly on the configurations relating to this difference.

Inside the cover portion (61) of the fluid controller according to the second embodiment, an annular concave portion (61b) that opens downwardly is disposed. The concave portion (61b) engages the transmitted member (10) therein. The transmitted member (10) of the second embodiment has the same configurations as that of the first embodiment except that the serration is formed on its bottom surface. The description of these configurations is not repeated here.

The upper surface of the handle body (62) has a plurality of receiving holes (62a) that is aligned circumferentially with a constant spacing. Each receiving hole receives the lower part of each elastic body (7) respectively consisting of coil spring and the like.

These elastic bodies (7) are configured to push the operating mechanism (5) downwardly. Also, the elastic bodies (7) are configured so that they provide the diaphragm with the minimum compression force to close the channel when the cover portion (61) reaches the predetermined lowest position.

The upper end of each elastic body (7) has the transmitting member (8). The transmitting member (8) is positioned in the concave portion (61b) of the cover portion (61) because the upper part of each elastic body (7) is inserted in the concave portion (61b) and pushes upwardly the transmitting member (8). The transmitting member (8) of the second embodiment has the same configurations as that of the first embodiment except that the serration is formed on the upper surface. The description of these configurations is not repeated here.

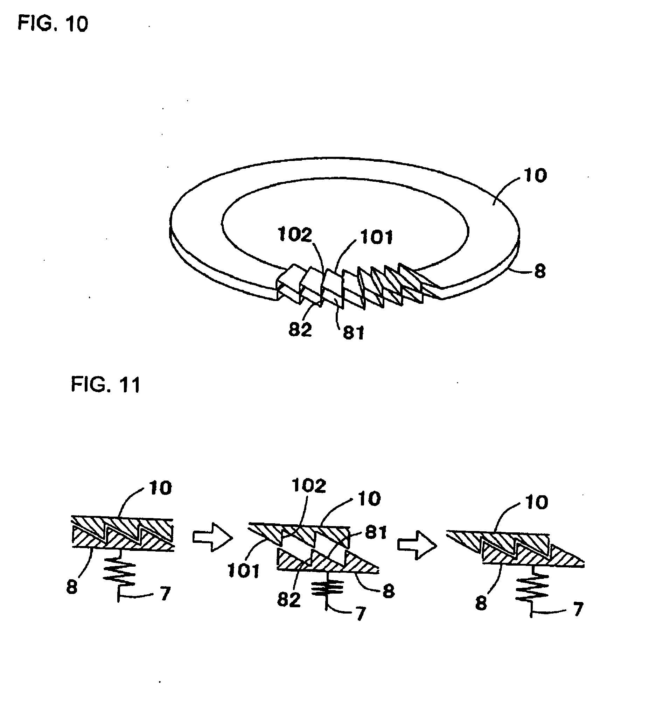

Fig. 10 is a perspective view showing the relative position of the transmitting member (8) and the transmitted member (10). In Fig. 10, the serration appears in a part of the transmitting member (8) and the transmitted member (10) like Fig. 7.

As shown in Fig. 10, the transmitting member (8) and the transmitted member (10) of the second embodiment are reversely positioned with respect to each other compared to the first embodiment. In the first embodiment, the transmitting member (8) is places on the transmitted member (10), while in the second embodiment the transmitted member (10) is placed on the second embodiment. The transmitting member (8) and the transmitted member (10) are positioned so that, in their normal position, the inclined surfaces of each member vertically face each other and that serrations of the transmitting member (8) and the transmitted member (10) engage with each other. The transmitting member (8) is pressed to the bottom surface of the transmitted member (10) because it is pushed upwardly by the elastic bodies (7) attached to the lower side of the transmitting member (8).

Next, the operation of the fluid controller according to the above-described second embodiment will be explained.
To close the fluid channel (21), the cover portion (61) of the handle element (6) is rotated in the tightening direction (clockwise direction). While being rotated, the cover portion (61) descends to move the handle body (62) and the operating mechanism (5) downwardly. The cover portion (61) descends only in a predetermined distance and does not descend further. The cover portion is configured to move down and stop at the predetermined lowest position.

If the cover portion (61) is rotated in the tightening direction after the cover portion (61) has descended in the maximum distance (the cover portion (61) reached the predetermined lowest position), the inclined surfaces (81) of the transmitting member (8) slide along the inclined surfaces (101) of the transmitted member (10) as shown in Fig. 11. In other words, the transmitting member (8) idly rotates on the transmitted member. This results in idle rotation of the cover portion (61). When the cover portion in this state is further rotated, the handle body (62) does not descend further.

On the other hand, if the cover portion (61) is rotated in the opposite direction (loosening direction), the vertical surfaces (82) of the transmitting member (8) meet the vertical surfaces (102) of the transmitted member (10). When the transmitting member (8) in this state is rotated, the transmitted member (10) is rotated accordingly. Thus, by rotating the cover portion (61), the handle body (62) is moved upwardly and the fluid channel (21) is opened.

While the cover portion (61) stays at the lowest position, the reaction force of the pushing force upwardly applied by the elastic bodies (7) is transmitted to the handle body (62) and to the operating mechanism (5). Accordingly, the diaphragm (3) contacts the sealing seat (22) to close the fluid channel (21).

The elastic bodies (7) are configured so that they provide the diaphragm (3) with the minimum compressing force required to close the fluid channel (21) without any excessive force acting on the diaphragm (3).

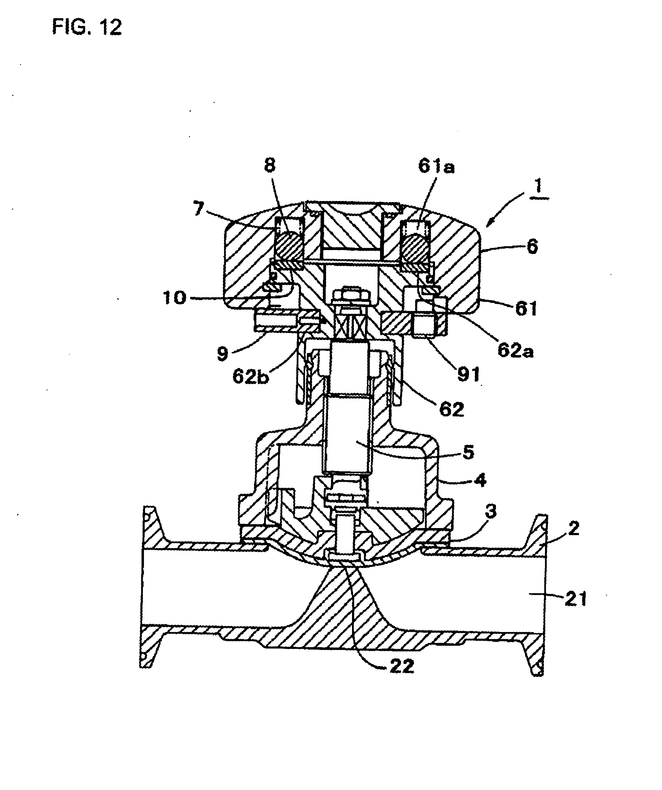

Fig. 12 is a longitudinal sectional view of the fluid controller according to the third embodiment of the present invention.

As the basic configuration of the third embodiment of the fluid controller is similar to those of the first embodiment, only the difference between these embodiments will be described below. Equivalent numerals are assigned to the similar configurations and the description of these configurations will be omitted.

The difference between the third embodiment and the first embodiment is that, the fluid controller according to the third embodiment comprises a plurality of spherical transmitting pieces (8). The description below will be made mainly on the configurations relating to this difference.

Inside the cover portion (61) of the third embodiment, a plurality of receiving holes (61a) downwardly opening is disposed. These receiving holes (61a) are aligned circumferentially with a constant spacing. Each receiving hole (61a) receives therein an elastic body (7) respectively consisting of coil spring and the like. At one end of each elastic body (7), the spherical transmitting piece (8) is disposed for transmitting the pushing force of the elastic bodies (7) to the handle body (62). The radius of the spherical shape is preferably smaller than the height of the vertical surfaces (102) of the transmitted member (10).

As in the first embodiment, the elastic bodies (7) are configured to push the operating mechanism (5) downwardly. Also, the elastic bodies (7) are configured so that they provide the diaphragm with the minimum compression force to close the channel when the cover portion (61) reaches the predetermined lowest position.

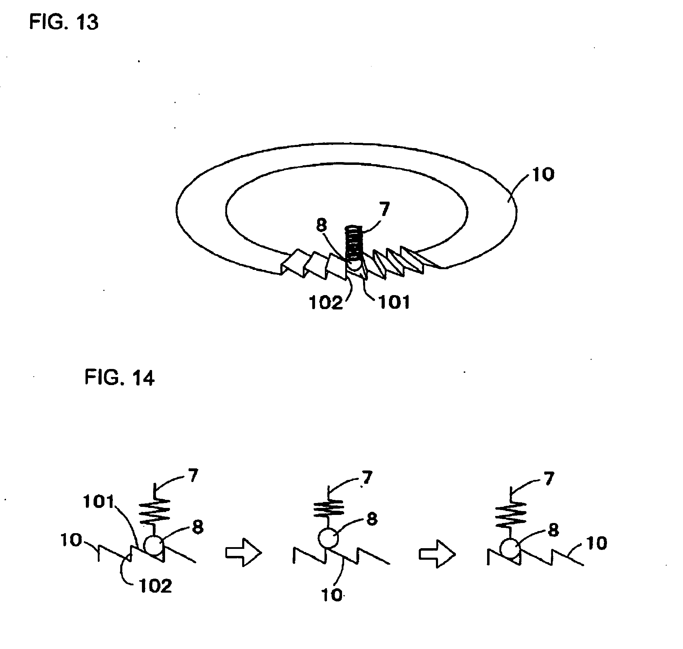

Fig. 13 is a perspective view showing the relative position of the transmitting pieces (8) and the transmitted member (10). In Fig. 13, only one of the transmitting pieces (8) is shown and the serration appears in a part of the transmitted member (10) as in Fig. 7, but it should be considered that a plurality of the transmitting pieces can be provided and that the serration can be formed on the whole surface of the transmitting member (8).

As shown in Fig. 13, each spherical transmitting piece (8), in its normal position, is located on one of the inclined surfaces of the transmitted member (10).

Each transmitting piece (8) is pressed to one of the inclined surfaces (101) of the transmitted member (10) downwardly by the elastic body attached to its upper side.

Next, the operation of the fluid controller according to the above-described third embodiment will be described.

To close the fluid channel (21), the cover portion (61) of the handle element (6) is rotated in the tightening direction (clockwise direction). While being rotated, the cover portion (61) descends to move the handle body (62) and the operating mechanism (5) downwardly. The cover portion (61) descends only in a predetermined distance and does not descend further. The cover portion (61) is configured to move down and stop at the predetermined lowest position.

If the cover portion (61) is rotated in the tightening direction after the cover portion (61) has descended in the maximum distance (the cover portion (61) reached the predetermined lowest position), the transmitting pieces (8) slide along the inclined surfaces (101) of the transmitted member (10) as shown in Fig. 14. In other words, the transmitting pieces (8) idly rotate on the transmitted member (10). This results in idle rotation of the cover portion (61). When the cover portion (61) in this state is further rotated, the handle body (62) is not further moved downwardly.

On the other hand, if the cover portion (61) is rotated in the opposite direction (the loosening direction), the lateral surface of each transmitting piece (8) contacts the vertical surface (102) of the transmitted member (10). When the transmitting pieces (8) in this state are rotated, the transmitted member (10) is rotated accordingly. Thus, by rotating the cover portion (61), the handle body (62) is moved upwardly and the fluid channel (21) is opened.

While the cover portion (61) stays at the lowest position, the reaction force of the upwardly pushing force of the elastic body (7) is transmitted from the transmitting members (8) via the transmitted member (10) to the handle body (62) and to the operating mechanism (5). Accordingly, the diaphragm (3) contacts the sealing seat (22) to close the fluid channel (21).

The elastic bodies (7) are configured so that they provide the diaphragm (3) with the minimum compressing force required to close the fluid channel (21) without any excessive force acting on the diaphragm (3).

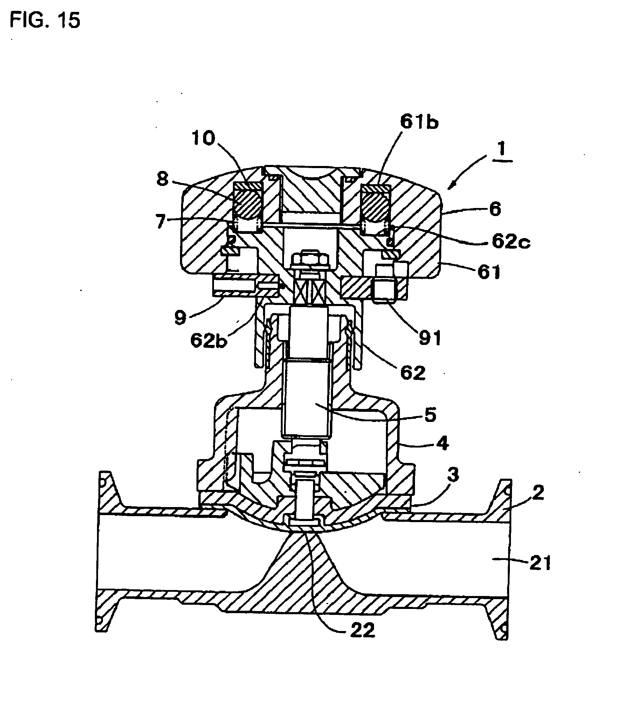

Fig. 15 is a longitudinal sectional view of the fluid controller according to the fourth embodiment of the present invention.

Since basic configuration of the fourth embodiment of the fluid controller is similar to those of the second embodiment, only the difference between these embodiments will be described below. Equivalent numerals are assigned to the similar configurations.

The difference between the fourth embodiment and the second embodiment is that the fluid controller according to the fourth embodiment comprises a plurality of spherical transmitting pieces (8) is provided. The description below will be made mainly on the configurations relating to this difference.

Inside the cover portion (61) of the fourth embodiment, downwardly opening annular concave portion (61b) is disposed. The concave portion (61a) engages therein the transmitted member (10). Since the configurations of the transmitted member (10) are similar to those of the second embodiment, the description of these configurations is not repeated here.

The upper surface of the handle body (62) has a plurality of receiving holes (62c) that is aligned circumferentially with a constant spacing. Each receiving hole (62c) receives therein the lower part of each elastic body (7) respectively consisting of coil spring and the like.

The elastic bodies (7) are configured to push the operating mechanism (5) downwardly. Also, the elastic bodies (7) are configured so that they provide the diaphragm with the minimum compression force to close the channel when the cover portion (61) reaches the predetermined lowest position.

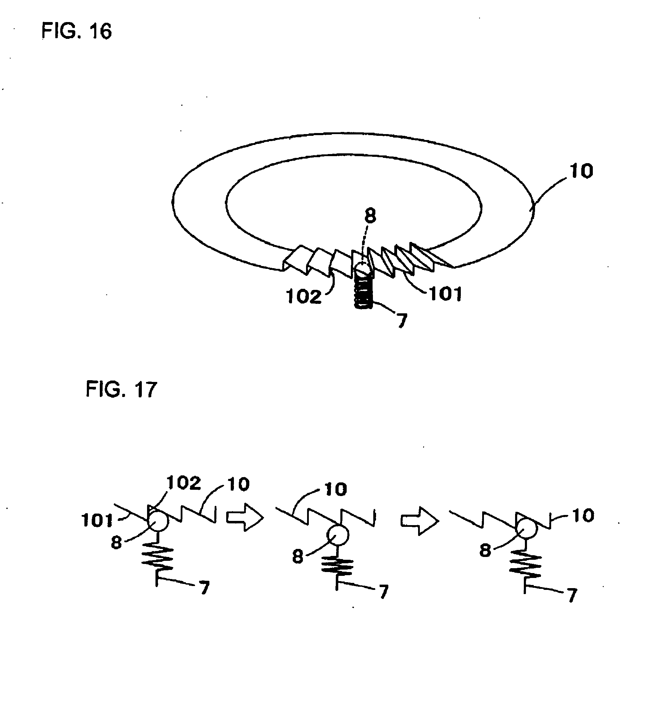

Fig. 16 is a perspective view showing the relative position of the transmitting pieces (8) and the transmitted member (10). In Fig. 16, only one of the transmitting pieces (8) is shown and the serration appears in a part of the transmitted member (10) as in Fig. 7, but it should be considered that a plurality of the transmitting pieces can be provided and that the serration can be formed on the whole surface of the transmitting member (8).

As shown in Fig. 16, each spherical transmitting piece (8), in its normal position, is located under one of the inclined surfaces of the transmitted member (10).

Each transmitting member (8) is pressed downwardly to one of the inclined surfaces (101) of the transmitted member by the elastic body attached to its upper side.

Next, the operation of the fluid controller according to the above-described fourth embodiment will be described.
To close the fluid channel (21), the cover portion (61) of the handle element (6) is rotated in the tightening direction (clockwise direction). While being rotated, the cover portion (61) descends to move the handle body (62) and the operating mechanism (5) downwardly. The cover portion (61) descends only in a predetermined distance and does not descend further. The cover portion is configured to move down and stop at the predetermined lowest position.

If the cover portion (61) is rotated in the tightening direction after the cover portion (61) has descended in the maximum distance (the cover portion (61) reached the predetermined lowest position), the transmitting piece (8) slide along the inclined surfaces (101) of the transmitted member (10) as shown in Fig. 14. In other words, the transmitting pieces (8) idly rotate on the transmitted member (10). This results in idle rotation of the cover portion (61). When the cover portion in this state is further rotated, the handle body (62) is not further moved downwardly.

On the other hand, if the cover portion (61) is rotated in the opposite direction (loosening direction), the lateral surface of each transmitting piece (8) contacts the vertical surfaces (102) of the transmitted member (10). When the transmitting pieces (8) in this state are rotated, the transmitted member (10) is rotated accordingly. Thus, by rotating the cover portion (61), the handle body (62) is moved upwardly and the fluid channel (21) is opened.

While the cover portion (61) stays at the lowest position, the reaction force of the pushing force upwardly applied by the elastic body (7) is transmitted from the transmitting pieces (8) via the transmitted member (10) to the handle body (62) and to the operating mechanism (5). Accordingly, the diaphragm (3) contacts the sealing seat (22) to close the fluid channel (21).

The elastic bodies (7) are configured so that they provide the diaphragm (3) with the minimum compressing force required to close the fluid channel (21) without any excessive force acting on the diaphragm (3).

The transmitting pieces (8) are not limited to spherical members. Rather, transmitting pieces (8) of any shape can be used in the third and the fourth embodiments of the present invention, as long as they have a circular surface and are aligned along the circumferential direction of the transmitted member (10) so that the circumferential surface can face the transmitted member (10).

A transmitting member/piece having a cylindrical shape, a semispherical shape, or the like can be attached to the elastic body (7).

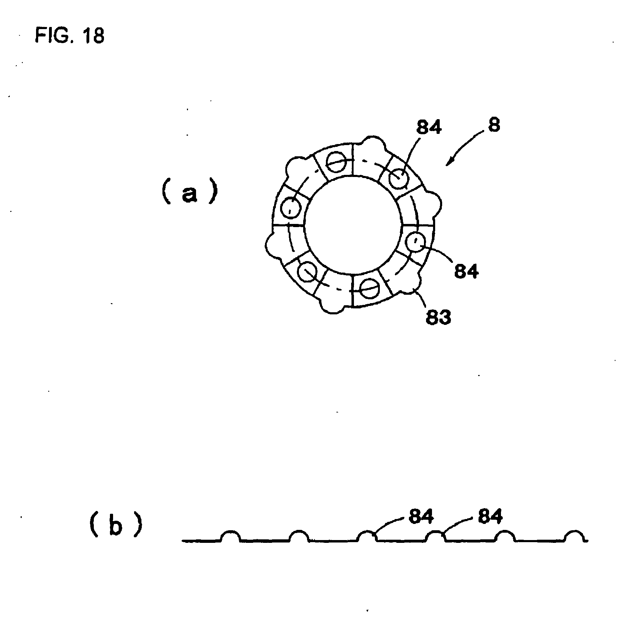

As shown in Fig. 18, the transmitting members (8) may be configured as a ring-shaped plate having a plurality of semispherical protrusions (84) on its one side (the side facing the transmitted member). Fig. 18(a) is a plane view and the Fig. 18(b) is a cross sectional view along the dashed and dotted line in Fig. 18(a). In this case, the transmitting member is engaged in the ring-shaped concave portion.

In the alternative embodiments described above, the radius of circular surface of the semispherical protrusions (84) and the spherical transmitting pieces (8) is preferably smaller than the height of the vertical surface (102) of the transmitted member (10).

Although, in the first to fourth embodiments described above, the elastic body (7) is provided only on the transmitting members/pieces (8), it may be provided on both the transmitting members/pieces (8) and the transmitted member (10) in the present invention. In this case, the transmitting member and the transmitted member are pushed in the opposite direction (facing direction) by the elastic body (7).

Also, in the first and second embodiments, the transmitted member (10) may be provided on its surface facing the transmitting member (8) with a circular surface along the circumferential direction of the transmitting member (8). Such transmitted member (10) may be a spherical member/piece, a member/piece as shown in Fig. 18, and the like.

In the fluid controller according to the first to fourth embodiments described above, once the cover portion starts to rotate idly, the locking piece (9) as shown in Fig. 9 can be engaged in the engaging portion (62b) of the handle body (62).

While the locking piece (9) is engaged in the handle body (62), the cover portion (61) is secured so that the screw (91) inserted in the hole (91a) protrudes upwardly into the cover portion (61). At the same time, a locking pin is inserted in the receiving hole (92) to connect the cover portion (61) and the handle body (62) and thereby to open and close the channel with the diaphragm (3).

Such configuration prevents the cover portion from rotating idly even if the tightening torque increases according to friction increase caused by grease degradation or the decreased grease on the screw surface during repeated use over a long period. Therefore the fluid channel is securely opened and closed in such situation.

### INDUSTRIAL APPLICATION

The present invention is preferably used in a device that needs torque control, such as a fluid controller for carrying out flow control in a chemical plant.

## Claims

1. A handle having a torque limiter usable in a device having an operating mechanism (5) moving vertically according to the rotation of a handle element (6), the handle element (6) comprising:
a cover portion (61) configured to move down by being rotated and
stop at the predetermined lowest position;
a handle body (62) disposed inside said cover portion and having a lower portion that is connected to said operating mechanism;
said cover portion (61) comprising:
receiving holes (61a) disposed therein;
elastic bodies (7) inserted in said receiving holes (61a) for pushing down said operating mechanism (5);
a transmitting member (8) disposed at one end of said elastic bodies for transmitting the pushing force of said elastic
bodies to said handle body;
wherein said elastic bodies push down said operating mechanism (5) with a minimum pushing force to obtain desired effect when said cover portion reaches said predetermined lowest position;
the upper portion of said handle body having therein a transmitted member (10) to which the bottom surface of said transmitting member is pressed,
wherein said transmitted member has a serration on its surface facing said transmitting member or said transmitting member has a serration on its surface facing said transmitted member;
said serration comprises inclined surfaces (81, 101) and vertical surfaces (82, 102) that are alternately arranged in a circumferential direction; and
said inclined surfaces are tilted upwardly along the direction in which said cover portion is rotated to move down.

2. A handle having a torque limiter usable in a device having an operating mechanism (5) moving vertically according to the rotation of a handle element (6), the handle element (6) comprising:
a cover portion (61) having a lower portion that is connected to said operating mechanism and configured to move down by being rotated and stop at the predetermined lowest position;
a handle body (62) disposed inside said cover portion;
said handle body comprising:
receiving holes (61a) disposed therein;
elastic bodies (7) inserted in said receiving holes (61a) for pushing down said operating mechanism (5);
a transmitting member (8) disposed at one end of each of said elastic bodies for transmitting the pushing force of said
elastic bodies to said handle body;
wherein said elastic bodies push down said operating mechanism (5) with a minimum pushing force to obtain desired effect when said cover portion reaches said predetermined lowest position;
the lower portion of said cover portion having therein a transmitted member (10) to which the upper surface of said transmitting member is pressed,
wherein said transmitted member has a serration on its surface facing said transmitting member or said transmitting member has a serration on its surface facing said transmitted member;
said serration comprises inclined surfaces (81, 101) and vertical surfaces (82, 102) that are alternately arranged in a circumferential direction; and
said inclined surfaces are tilted upwardly along the direction in which said cover portion is rotated to move down.

3. A fluid controller (1) comprising:
valve casing (2) having fluid channel (21) therein;
valve membrane (3) for opening and closing said fluid channel;
an operating mechanism (5) having a lower end that is connected to the upper side of said valve membrane;
a handle element (6) for vertically moving said operating mechanism; said handle element comprising:
a cover portion (61) configured to move down by being rotated and stop at the predetermined lowest position;
a handle body (62) disposed inside said cover portion(61) and
having a lower portion that is connected to said operating mechanism;
said cover portion comprising:
receiving holes (61a) disposed therein;
elastic bodies (7) inserted in said receiving holes (61a) for pushing said operating mechanism (5) downwardly;
a transmitting member (8) disposed at one end of said elastic bodies for transmitting the pushing force of said elastic
bodies to said handle body;
wherein said elastic bodies push down said operating mechanism (5) with a minimum pushing force to obtain desired effect when said cover portion reaches said predetermined lowest position;
the upper portion of said handle body having therein a transmitted member (10) to which the bottom surface of said transmitting member is pressed,
wherein said transmitted member has a serration on its surface facing said transmitting member or said transmitting member has a serration on its surface facing said transmitted member;
said serration has inclined surfaces (81, 101) and vertical surfaces (82, 102) that are alternately arranged in a circumferential direction; and
said inclined surfaces are tilted upwardly along a direction in which said cover portion is rotated to move down.

4. A fluid controller (1) comprising:
valve casing (2) having fluid channel (21) therein;
valve membrane (3) for opening and closing said fluid channel;
an operating mechanism (5) having a lower end that is connected to the upper side of said valve membrane;
a handle element (6) for vertically moving said operating mechanism; said handle element comprising:
a cover portion (61) configured to move down by being rotated and stop at the predetermined lowest position;
a handle body (62) disposed inside said cover portion(61) and
having a lower portion that is connected to said operating mechanism;
said handle body comprising:
receiving holes (61a) disposed therein;
elastic bodies (7) inserted in said receiving holes (61a) for pushing said operating mechanism (5) downwardly;
a transmitting member disposed at one end of each of said elastic bodies for transmitting the pushing force of said
elastic bodies to said handle body;
wherein said elastic bodies push down said operating mechanism (5) with a minimum pushing force to obtain desired effect when said cover portion reaches said predetermined lowest position;
the lower portion of said cover portion having therein a transmitted member (10) to which the upper surface of said transmitting member is pressed,
wherein said transmitted member has a serration on its surface facing said transmitting member or said transmitting member has a serration on its surface facing said transmitted member;
said serration has inclined surfaces (81, 101) and vertical surfaces (82, 102) that are alternately arranged in a circumferential direction; and
said inclined surfaces are tilted upwardly along a direction in which said cover portion is rotated to move down.

5. A fluid controller according to either claim 3 or 4,
wherein said transmitting member having on its surface facing said transmitted member a serration in which inclined surfaces (81) and vertical surfaces (82) are alternately arranged in a circumferential direction;
wherein said transmitted member having on its surface facing said transmitting member a serration in which inclined surfaces (81) and vertical surfaces (82) are alternately arranged in a circumferential direction; and
each of said inclined surfaces of said transmitted member is arranged to be pressed to one of said inclined surfaces of said transmitting member.

6. A fluid controller according to either claim 3 or 4,
wherein said transmitting member comprises a plurality of transmitting pieces having a circular surface facing said transmitted member;
said transmitting pieces are arranged along the circumferential direction of said transmitted member; and
each of said circular surface is configured to be pressed to one of said inclined surfaces of said transmitted member.

7. A fluid controller according to either claim 3 or 4,
wherein said transmitted member comprises a plurality of transmitted pieces having a circular surface facing said transmitting member;
said transmitted pieces are arranged along the circumferential direction of said transmitting member; and
each of said circular surface are arranged to be pressed to one of said inclined surfaces of said transmitting member.

8. A fluid controller according to either claim 6 or 7,
wherein either said plurality of transmitting pieces or said plurality of transmitted pieces has a spherical shape.

9. A fluid controller according to either claim 3 or 4,
wherein said receiving holes are configured as a ring-shaped groove; and
said elastic bodies comprise springs having the same diameter as said ring-shaped groove.
